# EUROPÄISCHE PATENTANMELDUNG

(11) **EP 1 109 393 A1**
(43) Veröffentlichungstag der Anmeldung: **20.06.2001**
(21) Anmeldenummer: 99125228.9
(22) Anmeldetag: 17.12.1999
(51) Int. Cl.: H04M 11/00, G08C 23/04

(54) **Fernsteuergerät zur Verwendung mit einem Telekommunikationsnetz**

(71) Anmelder: SIEMENS AKTIENGESELLSCHAFT, 80333 München (DE)
(72) Erfinder: Hafner, Karlheinz, 81739 München (DE); Tröster, Ansgar, 81543 München (DE); Watzke, Jörn, 81377 München (DE)

(57) **Zusammenfassung**

Die Erfindung betrifft ein Fernsteuergerät (FG) mit einer Sendeeinheit (SE) zur Abgabe von Steuersignalen (IS), insbesondere Infrarot-Steuersignalen, an fernbedienbare Geräte (FB), bei dem eine Anschlusseinheit (AE) zur Anbindung an ein Kommunikations- oder an ein Datennetz (N), und bei dem eine Umsetzeinrichtung (UE) zur Umsetzung von über die Anschlusseinheit (AE) empfangenen Fernbediensignalen (FS) in die Steuersignale (IS) vorgesehen sind.

## Beschreibung

Die Erfindung betrifft ein Fernsteuergerät mit einer Sendeeinheit zur Abgabe von Steuersignalen an fernbedienbare Geräte.

Solche fernbedienbaren Geräte sind beispielsweise Geräte der Unterhaltungselektronik, wie Wiedergabe- und Aufnahmegeräte für Audio- und Videosignale, aber auch Lampen und Heizungen. Die Geräte der Unterhaltungselektronik werden vorzugsweise mit Infrarot-Fernbedienungen drahtlos gesteuert. In vielen Haushalten sind mehrere Geräte fernbedienbar, wobei jedes mit einer eigenen Fernbedienung ausgeliefert wurde.

Dies bedingt eine Mehrzahl von Fernbedienungen. Dieser Nachteil kann durch lernfähige multifunktionale Zusatzgeräte gelöst werden. Durch das vorgegebene Tastenlayout und die begrenzte Anzahl von Funktionen ist diese Lösung nicht optimal. In der Regel ist eine Sichtverbindung zwischen Fernbedienung und dem zu bedienenden Gerät erforderlich. Es sind Lösungen bekannt, bei denen eine Zwischenstrecke durch HF-Signale überbrückt werden kann. Hierdurch ist beispielsweise die Fernbedienung von einem anderen Zimmer aus möglich.

Der Erfindung liegt die Aufgabe zugrunde, die Fernbedienung von entsprechenden Geräten zu verbessern.

Diese Aufgabe wird erfindungsgemäß durch die im Patentanspruch 1 angegebenen Merkmale gelöst.

Das erfindungsgemäße Fernsteuergerät ermöglicht zum Einen die Ansteuerung einer Mehrzahl von fernbedienbaren Geräten durch nur ein Steuergerät, zum Anderen eine standortunabhängige Fernbedienung.

Im Folgenden wird die Erfindung anhand eines in der Zeichnung dargestellten Ausführungsbeispieles beschrieben. Dabei zeigen
- Figur 1: ein Szenario zur standortunabhängigen Bedienung von Geräten mit dem erfindungsgemäßen Fernsteuergerät, und
- Figur 2: ein Szenario zur Programmierung des Fernsteuergerätes.

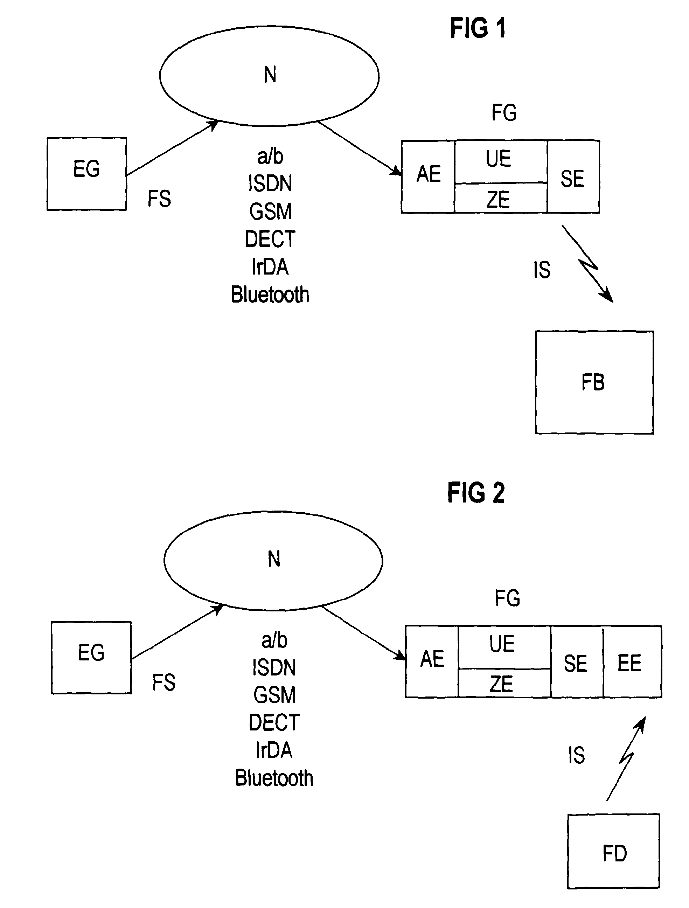

Das in Figur 1 dargestellte Fernsteuergerät FG weist eine an sich bekannte Sendeeinheit SE auf. Diese Sendeeinheit SE ist beispielsweise eine Infrarot-Sendeeinheit, von der Infrarotsteuer- beziehungsweise Fernbediensignale IS an ein entsprechend fernbedienbares Gerät FB gegeben werden.

Erfindungsgemäß weist das Fernsteuergerät FG eine Anschlusseinheit AE und eine Umsetzeinrichtung UE auf. Über die Anschlusseinheit AE ist das Fernsteuergerät FG mit einem Netz N verbunden. Dieses Netz N kann ein Kommunikationsnetz oder ein Datennetz sein. Als Kommunikationsnetz kommen digitale oder analoge, sowie drahtlose und schnurgebundene Netze in Frage. Der verwendete Standard, a/b, ISDN, DECT, IrDA, Bluetooth, GSM oder zukünftige Standards, ist für die Erfindung von untergeordneter Bedeutung. Analoges gilt für die Datennetze.

Die Umsetzeinrichtung UE des Fernsteuergerätes FG dient zur Umsetzung von empfangenen Fernbediensignalen FS in die Steuersignale IS. Hierbei werden die Fernbediensignale FS von einem Endgerät EG an das Netz N abgegeben. Das Endgerät EG kann ein Endgerät der Kommunikations- oder der Datentechnik sein. Es kann beispielsweise ein herkömmliches Telefon sein, an dem die Fernbediensignale FS durch Tastenkombination oder unter Verwendung eines sogenannten DTMF-Senders eingegeben werden. Die Fernbediensignale FS können Zwei- oder Mehrfrequenztöne, SPrachsignale oder auch Datensignale sein. Das Endgerät EG kann, wie schon ausgeführt, ein herkömmliches Telefon oder ein spezielles Kommunikationsendgerät sein, das unter anderem für die Verwendung zur Fernsteuerung von entsprechenden Geräten ausgebildet ist.

Bei einer Weiterbildung der Erfindung weist das Fernsteuergerät FG zusätzlich ein Empfangseinheit EE auf. In einer Lernbeziehungsweise Programmierphase kann das Fernsteuergerät FG auf unterschiedliche Fernbedienungen beziehungsweise fern zu bedienende Geräte programmiert werden. Hierbei wird beispielsweise eine herkömmliche Fernbedienung in Sichtweise vor die Empfangseinheit EE gebracht. Durch gleichzeitige oder aufeinanderfolgende Abgabe von einerseits den Steuersignalen IS von der Fernbedienung, und andererseits von Fernbediensignalen FS vom Endgerät EG wird im Fernsteuergerät FG die Zuordnung abgespeichert.

Bei der Verwendung des erfindungsgemäßen Fernsteuergerätes FG ist keine Modifikation an den zu bedienenden Geräten erforderlich. Als Netz N kann eine herkömmliche Telekommunikations-Infrastruktur verwendet werden. Weiter ist zwischen dem Fernsteuergerät FG und dem fern zu bedienenden Gerät keine Sichtverbindung erforderlich. Die Fernbedienung ist von jedem externen Teilnehmeranschluss möglich. Weiter können herkömmliche Telefone benutzt werden. Bei entsprechender Aufstellung des Fernsteuergerätes können mehrere Geräte ferngesteuert werden. Wenn die Aufstellungsverhältnisse dies nicht erlauben, kann durch eine Mehrzahl von Fernsteuergeräten FG, die beispielsweise einzeln adressierbar sind, die Fernbedienung erfolgen.

Durch das erfindungsgemäße Fernsteuergerät FG werden existierende drahtlose oder schnurlose Telekommunikationsnetze oder auch Nebenstellenanlagen genutzt. Beim Betrieb des Fernsteuergerätes FG erfolgt vorzugsweise eine automatische Annahme von internen und externen Verbindungen. Bei einer Weiterbildung der Erfindung erfolgt eine Authentifizierung des Anrufenden. Hierzu weist das Fernsteuergerät FG eine Zugriffskontrolleinrichtung ZE auf. In der Zugriffskontrolleinrichtung ZE wird beispielsweise eine eingegebene PIN oder ein Passwort überprüft. Die Authentifizierung kann auch über die Rufnummer des Anrufenden erfolgen.

## Patentansprüche

1. Fernsteuergerät (FG)
mit einer Sendeeinheit (SE) zur Abgabe von Steuersignalen (IS), insbesondere Infrarot-Steuersignalen, an fernbedienbare Geräte (FB),
bei dem eine Anschlusseinheit (AE) zur Anbindung an ein Kommunikations- oder an ein Datennetz (N), und
bei dem eine Umsetzeinrichtung (UE) zur Umsetzung von über die Anschlusseinheit (AE) empfangenen Fernbediensignalen (FS) in die Steuersignale (IS) vorgesehen sind.

2. Fernsteuergerät (FG) nach Anspruch 1,
bei dem eine Empfangseinrichtung (EE) für die Steuersignale (IS) vorgesehen ist, so dass die jeweils einander zugeordneten Steuersignale (IS) und Fernbediensignale (FS) speicherbar sind.

3. Fernsteuergerät (FG) nach Anspruch 1 oder 2,
bei dem die Fernbediensignale (FS) Mehrfrequenztöne sind.

4. Fernsteuergerät (FG) nach Anspruch 1 oder 2,
bei dem die Fernbediensignale (FS) Sprachsignale sind.

5. Fernsteuergerät (FG) nach einem der vorhergehenden Ansprüche 1 bis 4,
bei dem eine Zugangskontrolleinrichtung (ZE) vorgesehen ist, durch die ein Anruf auf Berechtigung überprüfbar ist.
